# EUROPÄISCHE PATENTSCHRIFT

(11) **EP 2 662 806 B1**
(45) Veröffentlichungstag und Bekanntmachung des Hinweises auf die Patenterteilung: **14.05.2014**
(21) Anmeldenummer: 12167666.2
(22) Anmeldetag: 11.05.2012
(51) Int. Cl.: G06K 19/06, G07D 7/20, B82Y 10/00, G01N 33/543

(54) **Optisches Kennzeichnungsmerkmal**
Optical identification feature
Caractéristique d'identification optique

(43) Veröffentlichungstag der Anmeldung: 13.11.2013
(73) Patentinhaber: Sick AG, 79183 Waldkirch/Breisgau (DE)
(72) Erfinder: Blöhbaum, Frank, 79312 Emmendingen (DE)
(74) Vertreter: Manitz, Finsterwald & Partner GbR

(56) Entgegenhaltungen:
- EP-A2- 1 972 463
- DE-A1- 10 248 870
- DE-A1-102005 045 642
- US-A1- 2005 110 978
- US-A1- 2008 030 726
- US-A1- 2009 008 925

## Beschreibung

Die Erfindung betrifft ein System zur Charakterisierung und Identifikation eines Gegenstandes unter Einsatz eines optischen Kennzeichnungsmerkmals, und ein Verfahren zur Identifikation oder Charakterisierung eines Gegenstands unter Verwendung eines solchen Systems.

In solchen Kennzeichnungsmerkmalen kann Identifikationsinformation enthalten sein, die eine eindeutige Identifikation des Gegenstandes ermöglicht, auf dem das Kennzeichnungsmerkmal aufgebracht ist. Andere Anwendungen sehen vor, dass in dem Kennzeichnungsmerkmal Information, die über die Beschaffenheit des Gegenstandes oder z.B. über den Inhalt des Gegenstandes (wenn es sich dabei um ein Behältnis handelt) codiert ist.

Für die Kennzeichnung von Produkten gibt es eine Anzahl von bekannten Verfahren. Insbesondere können z.B. Wertdokumente mit Wasserzeichen ausgestattet sein, die sich jedoch schlecht computergestützt erfassen lassen. Andere Kennzeichnungsverfahren verwenden aufgedruckte Barcodes oder Matrixcodes, die sich leichter optisch erfassen lassen und elektronisch auswerten lassen. Derartige Barcodes oder Matrixcodes können z.B. mit Lasern erzeugt werden. Barcodes und Matrixcodes benötigen ausreichend Platz und weisen nur eine begrenzte Fälschungssicherheit auf. US 2009/0008925 A1, gegen die die Ansprüche abgegrenzt sind, beschreibt ein Sicherheitsmerkmal, bei dem Nanostrukturen eingesetzt werden können, um eine optische Kennzeichnung zu ermöglichen. Die Nanopartikel sind stochastisch auf einer zu kennzeichnenden Oberfläche verteilt. Die Größenverteilung der Nanopartikel führt dazu, dass bei Bestrahlung mit kohärentem Licht und anschließender zweidimensionaler Fourier-Transformation ein ausgeprägter Peak auftritt, der die Größenverteilung angibt. Bei Einstrahlung eines kohärenten Lichtstrahls auf das Sicherheitsmerkmal entsteht ein ringförmiges Speckle-Muster, das einen Rückschluss auf die Größe der verwendeten Nanopartikel zulässt und einen Vergleich mit gespeicherten Mustern zur Identifikation ermöglicht.

US 2005/0110978 A1 beschreibt die Verwendung von Nanopartikeln zur Authentifizierung. Die Partikel werden eingesetzt, um elektromagnetische Strahlung in Wärmeenergie umzusetzen und ein sich gegebenenfalls durch den Temperaturverlauf ändernder optischer Response ausgewertet wird.

DE 10 2005 045 642 A1 beschreibt die Verwendung von Nanopartikeln, die ein spezielles Spektrum reflektieren. Die Schrift ist auf die Verwendung von Schalenstrukturen unterschiedlicher Organismen gerichtet, die unterschiedliche Formen haben können und in Mustern aufgebracht werden können.

EP 1 972 463 A2 beschreibt die Verwendung von Nanopartikeln als Sicherheitsmerkmal. Die beschriebenen Nanopartikel sind in einem Material enthalten, das eine photonische Bandlücke enthält. Der Merkmalsbereich selbst kann die Form von Mustern haben.

DE 102 48 870 A1 beschreibt die Verwendung von nanoskaligen Partikeln, die mittels elektromagnetischer Strahlung beleuchtet werden. Die Strahlung wird zur Erwärmung benutzt, um im Anschluss das Emissionsspektrum und/oder die Relaxationszeit auszuwerten, um die Echtheit eines Gegenstandes zu prüfen.

Aufgabe der vorliegenden Erfindung ist es, eine Kennzeichnungsmöglichkeit zu schaffen, mit der einerseits eine einfache und trotzdem sichere Identifizierung oder Charakterisierung eines Gegenstandes möglich ist und die andererseits nur einen geringen Flächenbedarf aufweist.

Die Erfindung ist durch die unabhängigen Ansprüche definiert.

Aus den abhängigen Ansprüchen ergeben sich bevorzugte Ausführungsformen.

Die Nanostrukturen zeichnen sich dadurch aus, dass sie Strukturdimensionen im Bereich von Nanometern, insbesondere einigen hundert Nanometern haben. Sie können daher mit eingestrahltem Licht wechselwirken, wenn dessen Wellenlänge bzw. Wellenlängenbereich entsprechend ausgewählt ist. Bevorzugt weisen die Nanostrukturen dementsprechend wenigstens in einer räumlichen Dimension eine Ausdehnung im Bereich des Wellenlängenbereichs oder der Wellenlänge des Detektionslichts auf, wobei entweder die Nanostrukturen entsprechend an das zu verwendende Detektionslicht angepasst sind oder das Detektionslicht entsprechend ausgewählt wird.

Erfindungsgemäß sind die Nanostrukturen auf der Oberfläche derart ausgestaltet und angeordnet, dass Licht, das von ihnen in Reaktion auf die Beleuchtung mit Detektionslicht abgestrahlt wird, ein Interferenzmuster ergibt, das dem darzustellenden Muster entspricht. Dabei müssen die Nanostrukturen nicht selbst in dem darzustellenden Muster angeordnet sein, sondern müssen in ihrer Anordnung und Ausrichtung nur derart vorliegen, dass das von ihnen abgestrahlte Licht am Ort eines Detektors derart konstruktiv interferiert, dass das darzustellende Lichtmuster am Detektor erzeugt wird.

Bei einer bevorzugten Ausführungsform handelt es sich bei den Nanostrukturen um langgestreckte Elemente, zum Beispiel Zylinder, wobei vorzugsweise die Längenausdehnung derart ist, dass eine resonante Wechselwirkung mit dem Detektionslicht möglich ist. So ist zum Beispiel eine Wechselwirkung möglich, wenn die Nanostrukturen eine Länge haben, die einem ganzzahligen Vielfachen der halben Wellenlänge des Detektionslichtes entspricht, bevorzugt eine Länge, die der halben Wellenlänge des Detektionslichtes entspricht.

Langgestreckte Nanoelemente sind für die Anwendung als Antenne in WO 2006/094081 und dem Artikel "Nanoantennen als optische Sensoren für Highspeed-Datennetze", Sensor Magazin 4/2009, S. 46 oder in einer Pressemitteilung der Universität Basel vom 10. Juni 2005 "Basler Forscher entwickeln Nanoantenne für Licht" beschrieben

Grundsätzlich können mit den Nanostrukturen unterschiedliche Interferenzmuster zur Identifizierung oder Charakterisierung des Gegenstandes erzeugt werden. Eine bevorzugte Ausgestaltung sieht vor, dass die Nanostrukturen derart ausgestaltet und angeordnet sind, dass sie bei Beleuchtung mit Detektionslicht ein Muster darstellen, das einen Barcode oder einem Matrixcode entspricht.

Barcodes und Matrixcodes sind besonders geeignet zur Informationsdarstellung und lassen sich auf einfache Weise detektieren und auslesen.

Andere Muster sind jedoch ebenfalls denkbar. Die bei Beleuchtung mit dem Detektionslicht erzeugten Interferenzmuster können dann z.B. durch Vergleich mit in einem Speicher abgelegten Mustern zur Identifizierung oder Charakterisierung des Gegenstandes eingesetzt werden.

Die Nanostrukturen können auf verschiedene Weise erzeugt werden. Mögliche Herstellungstechniken sind in WO 2006/094081 A2 für einen anderen Zweck beschrieben.

Ein bevorzugtes Herstellungsverfahren sieht vor, dass die Nanostrukturen mittels Nanoimprintlithographie hergestellt werden.

Schließlich ist es auch möglich, dass die Nanostrukturen z.B. mit Elektronenstrahllithographie oder anderen aus der Mikroelektronik bekannten lithographischen Prozessen zur Strukturierung dünner Metallschichten auf einer Oberfläche aufgebracht werden.

Als Material der Nanostrukturen kann Metall, zum Beispiel Gold, eingesetzt werden.

Vorteilhafterweise werden jedoch leitende Polymere eingesetzt. Eine andere Ausgestaltung sieht die Verwendung nicht leitender Polymere für die Nanostrukturen vor, die nachträglich in weiteren Prozessschritten z.B. mittels PVD (physical vapor deposition) und/oder Ätzverfahren metallisiert werden.

Ein erfindungsgemäßes System zur Identifizierung oder Charakterisierung von Gegenständen weist wenigstens eine Lichtquelle zur Abstrahlung von Detektionslicht auf. Das erfindungsgemäße System weist außerdem einen ortsauflösenden optischen Detektor auf, mit dessen Hilfe das von dem wenigstens einen optischen Kennzeichnungsmerkmal in Reaktion auf die Beleuchtung mit dem Detektionslicht erzeugte Lichtmuster erfasst werden kann. Bei dem ortsauflösenden optischen Detektor kann es sich z.B. um eine Fotodiodenarray oder ein PSD (position sensitive device) handeln.

Die Lichtquelle zur Abstrahlung des Detektionslichts und die verwendeten Nanostrukturen sind derart aufeinander abgestimmt, dass die Nanostrukturen mit einer Wellenlänge oder einem Wellenlängenbereich des Detektionslichts wechselwirken können. Dabei kann es sich zum Beispiel um Licht im sichtbaren, im infraroten oder im ultravioletten Wellenlängenbereich handeln. Wenn es sich bei den eingesetzten Nanostrukturen um langgestreckte Strukturen handelt, so können diese eine Länge eines Vielfachen der halben Wellenlänge des Detektionslichtes haben.

Der Detektor ist derart angeordnet, dass er bei der zu erwartenden Lage des zu identifizierenden Gegenstandes bei der Identifizierung bzw. Charakterisierung an einem Ort der konstruktiven Interferenz der von den Nanostrukturen abgegebenen Lichts angeordnet ist.

Das erfindungsgemäße System weist außerdem eine mit dem Detektor verbundene Auswerteeinheit zur Identifizierung oder Charakterisierung des Gegenstandes aus dem detektierten Lichtmuster auf. Diese Auswerteeinheit kann z.B. mit einer Speichereinheit und einer Vergleichseinheit verbunden sein (oder solche Einheiten umfassen), die es ermöglichen, dass in der Speichereinheit abgelegte Referenzmuster mit dem detektierten Lichtmuster verglichen werden, um so eine Identifizierung oder Charakterisierung des Gegenstandes zu ermöglichen, mit dem das optische Kennzeichnungsmerkmal verbunden ist.

Ein Referenzmuster kann z.B. in einer Speichereinheit abgelegt sein. Diese Speichereinheit kann auch verschiedene Referenzmuster aufweisen, so dass verschiedene Gegenstände identifiziert werden können oder verschiedene Eigenschaften mit dem optischen Kennzeichnungsmerkmal angegeben werden können.

Die Erfindung wird anhand der beiliegenden Figuren im Detail erläutert, die erfindungsgemäße Ausführungsformen darstellen. Die Darstellungen in den Figuren sind dabei nicht maßstabsgetreu zu verstehen und sind nur schematischer Natur. Es zeigen:
- Fig. 1: die Draufsicht auf eine Ausführungsform eines erfindungsgemäßen optischen Kennzeichnungsmerkmals,
- Fig. 2: eine Seitenansicht auf das in Fig. 1 dargestellte optische Kennzeichnungsmerkmal, und
- Fig. 3: den Aufbau einer Ausführungsform eines erfindungsgemäßen Systems.

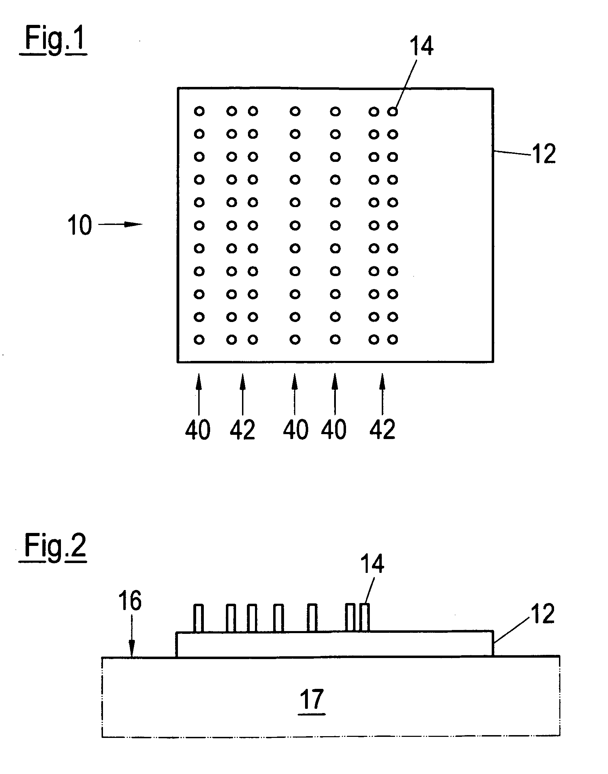

Fig. 1 zeigt die Draufsicht auf ein optisches Kennzeichnungselement 10 einer erfindungsgemäßen Ausführungsform. Das optische Kennzeichnungselement 10 umfasst bei der beschriebenen Ausführungsform ein Substrat 12, auf dem Nanostrukturen angeordnet sind.

Fig. 2 zeigt eine seitliche Ansicht. Bei der gezeigten Ausführungsform befindet sich das Substrat 12, das z.B. eine entsprechende Folie umfassen kann, auf der Oberfläche 16 eines Gegenstandes 17, der durch das Kennzeichnungselement 10 identifiziert oder charakterisiert werden soll. Bei anderen Ausführungsformen sind die Nanostrukturen 14 direkt auf der Oberfläche 16 des Gegenstandes 17 vorgesehen.

Bei dem gezeigten Beispiel handelt es sich bei den Nanostrukturen um langgestreckte Nanoelemente 14.

Die Nanostrukturen werden auf dem Substrat 12 z.B. mit Hilfe der Nanoimprintlithographie hergestellt. Andere Herstellungstechniken sind ebenfalls möglich, z.B. Elektronenstrahllithographie oder aus der Mikroelektronik bekannte lithographische Prozesstechniken.

Als Material kommen leitende Polymere oder Metalle, zum Beispiel Gold, in Frage. Andere Ausgestaltungen sehen die Verwendung von nicht leitenden Polymeren vor, die in einem nachträglichen Prozessierungsschritt in an sich bekannter Weise metallisiert werden.

Wie es insbesondere in Fig. 1 erkennbar ist, können die Nanostrukturen 14 in einem Muster aus Streifen 40, 42 angeordnet sein, die gegebenenfalls unterschiedlichen Abstand und unterschiedliche Dicke haben. Auf diese Weise lässt sich ein barcodeähnliches Muster zum Beispiel mit breiteren Streifen 42 und schmaleren Streifen 40, gegebenenfalls in unterschiedlichen Abständen, erzeugen, in dessen Musterstruktur bereits Information über den Gegenstand 17 enthalten ist. Dabei kann es sich um Information zur Identifizierung des Gegenstandes 17 handeln oder z.B. um charakteristische Eigenschaften oder den Inhalt des Gegenstandes 17, wenn es sich dabei um ein Behältnis handelt.

Die Streifen sind nur der Darstellung halber in einer Breite von ein oder zwei Nanostrukturen gezeigt. Tatsächlich sind andere Anzahlen oder Anordnungen möglich, bei denen die einzelnen Nanostrukturen innerhalb der Streifen nicht regelmäßig angeordnet sind.

Die Nanostrukturen 14, die hier als langgestreckte Nanoelemente 14 ausgestaltet sind, haben zumindest in einer Richtung äußere Dimensionen im Bereich von einigen einhundert Nanometern, dass sie in resonante Wechselwirkung mit sichtbarem Licht treten können. Insbesondere gilt das für ihre Längenausdehnung.

Soll als Detektionslicht Licht aus dem nicht sichtbaren Bereich, z.B. Infrarot oder Ultraviolett eingesetzt werden, sind die Dimensionen der Nanostrukturen an dessen Wellenlänge angepasst.

Die Ausdehnung des optischen Kennzeichnungselements 10, also insbesondere des Substrats 12, kann sehr klein sein, da die einzelnen Nanostrukturen Dimensionen von nur wenigen einhundert Nanometern haben.

Bestrahlung des Kennzeichnungselements 10 mit Detektionslicht bewirkt eine Wechselwirkung der Beleuchtungsstrahlung mit den Nanostrukturen 14, die dann in Reaktion auf die Bestrahlung mit dem Detektionslicht ein Lichtmuster in Form der Anordnung der Nanostrukturen 14 auf dem Substrat 12 erzeugen. Das so erzeugte Lichtmuster ist in der Form des Barcodes, der durch die Anordnung der Nanostrukturen 14 auf dem Substrat 12 gebildet wird.

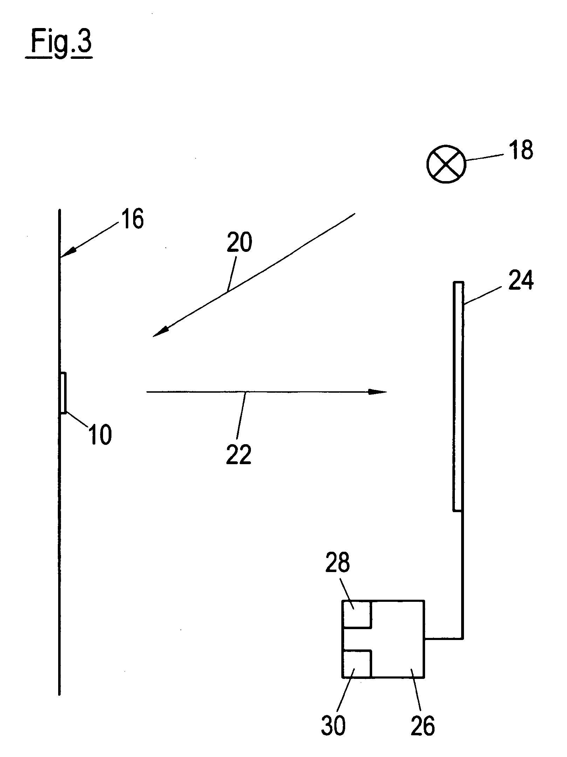

Fig. 3 zeigt eine Ausführungsform eines Systems zur Identifizierung mit Hilfe optischer Kennzeichnungsmerkmale 10 auf der Oberfläche 16 eines Gegenstandes 17.

Mit Hilfe einer Lichtquelle 18 wird Detektionslicht 20 in Richtung des Kennzeichnungselements 10 geschickt. Das in Reaktion darauf von den Nanostrukturen 14 des Kennzeichnungselements 10 erzeugte Licht 22 fällt auf ein Fotodiodenarray 24, das eine ortsaufgelöste Detektion erlaubt. An dem Fotodiodenarray 24 ist also das Lichtmuster erkennbar, das durch die Bestrahlung der Nanostrukturen 14 erzeugt wird. Diese ortsaufgelöste Information des Fotodiodenarrays 24 wird an eine Auswerteeinheit 26 weitergeleitet und dort weiterverarbeitet. Die in dem Lichtmuster enthaltene Information kann dabei direkt ausgewertet werden, wenn das Lichtmuster zum Beispiel einem Barcode oder einem Matrixcode entspricht.

Bei der gezeigten Ausführungsform sind hingegen eine Speichereinheit 28 und eine Vergleichseinheit 30 vorgesehen. In der Speichereinheit 28 können verschiedene Referenzmuster abgelegt sein, die durch die Vergleichseinheit 30 mit dem von dem Fotoarray 24 detektierten Lichtmuster verglichen werden und z.B. mit Hilfe einer Nachschlagetabelle bestimmten Gegenständen 17 oder deren Eigenschaften zugeordnet werden können.

Bei der Auswerteeinheit 26 kann es sich z.B. um einen Mikroprozessor handeln, der entweder mit der Speichereinheit 28 zusammengeschaltet ist oder diese umfasst.

Bei einer erfindungsgemäßen Ausgestaltung sind die Nanostrukturen 14 derart angeordnet und ausgestaltet, dass sie bei Bestrahlung mit Detektionslicht 20 ein Interferenzmuster erzeugen, das an der Stelle des Fotodiodenarrays 24 konstruktiv zu einem Lichtmuster interferiert, das dann in analoger Weise durch die Auswerteeinheit 26 detektiert werden kann.

In einem vorherigen Einlernprozess wird das auf diese Weise erzeugbare Lichtmuster z.B. eingelernt und in der Speichereinheit 28 abgelegt. Im späteren Betrieb zur Identifizierung oder Charakterisierung des Gegenstandes 17 kann dann von der Auswerteeinheit 26 abgeprüft werden, ob das tatsächlich vorhandene Lichtmuster mit dem vorher eingelernten Lichtmuster übereinstimmt, so dass eine Identifizierung oder Charakterisierung möglich ist.

Die Beleuchtung mit Detektionslicht kann je nach Ausführungsform auf unterschiedliche Weise erfolgen.

Bei einer ersten Alternative wird Detektionslicht einer Wellenlänge oder eines Wellenlängenbereiches auf das Kennzeichnungselement 10 gestrahlt, die mit den verwendeten Nanostrukturen 14 wechselwirken kann, also z.B. resonant wechselwirken kann. Die in Reaktion auf die Bestrahlung mit dem Detektionslicht erzeugte Strahlung des optischen Kennzeichnungselements hat dann ebenfalls diese Wellenlänge oder liegt in dem verwendeten Wellenlängenbereich.

Das Fotodiodenarray 24 ist dann vorteilhafterweise so ausgestaltet, dass es auch oder nur diese Wellenlänge oder diesen Wellenlängenbereich detektieren kann.

Bei einer anderen erfindungsgemäßen Ausgestaltung wird weißes Detektionslicht eingestrahlt. Die Nanostrukturen sind derart ausgestaltet, dass sie nur mit Licht einer Wellenlänge oder eines kleinen Wellenlängenbereiches wechselwirken können, so dass die in Antwort auf die Einstrahlung des weißen Detektionslichts erzeugte Strahlung nur diese Wellenlänge oder diesen begrenzten Wellenlängenbereich umfasst. Das Fotodiodenarray ist dann ebenfalls zur Detektion dieser Wellenlänge oder des begrenzten Wellenlängenbereiches geeignet, so dass auf diese Weise das Muster in diesem begrenzten Wellenlängenbereich oder bei dieser einen ausgewählten Wellenlänge detektiert wird. Auf diese Weise ist die Identifizierung oder Charakterisierung des Gegenstandes 17 möglich.

Das erfindungsgemäße System und das erfindungsgemäße Verfahren ermöglichen dementsprechend eine sichere Identifizierung und Charakterisierung des Gegenstandes 17, wobei das Kennzeichnungsmerkmal selbst nur einen sehr geringen Flächenbedarf aufweist.

Eine genaue Nachbildung des optischen Kennzeichnungselements ist schwierig, so dass die Fälschungssicherheit sehr hoch ist.

### Bezugszeichenliste

- 10: optisches Kennzeichnungselement
- 12: Substrat
- 14: Nanostruktur
- 16: Oberfläche
- 17: Gegenstand
- 18: Detektionslichtquelle
- 20: Detektionslicht
- 22: vom Kennzeichnungselement in Antwort auf die Einstrahlung des Detektionslichts erzeugte Strahlung
- 24: Fotodiodenarray
- 26: Auswerteeinheit
- 28: Speichereinheit
- 30: Vergleichseinheit
- 40, 42: Nanostrukturanordnung

## Patentansprüche

1. System zur Identifizierung oder Charakterisierung von Gegenständen (17) mit
- wenigstens einem optischen Kennzeichnungsmerkmal (10), das eine Anzahl von Nanostrukturen (14) auf einer Oberfläche (16) eines Gegenstandes (17) oder auf einem auf einer Oberfläche (16) eines Gegenstandes (17) befindlichen Substrat (12) umfasst, wobei die Nanostrukturen derart ausgestaltet sind, dass sie bei Beleuchtung mit Detektionslicht (20) ein Lichtmuster erzeugen, das zur Identifikation und/oder Charakterisierung des Gegenstandes (17) dient,
- einer Lichtquelle (18) zur Abstrahlung des Detektionslichtes (20),
- einem ortsauflösenden optischen Detektor (24) zur Detektion des von dem wenigstens einen optischen Kennzeichnungsmerkmal (10) in Reaktion auf die Beleuchtung mit dem Detektionslicht (20) erzeugten Lichtmusters, und
- einer mit dem Detektor verbundenen Auswerteeinheit (26) zur Identifikation oder Charakterisierung des Gegenstandes (17) aus dem detektierten Lichtmuster,
**dadurch gekennzeichnet, dass**
die Nanostrukturen (14) derart ausgestaltet und angeordnet sind, dass das Lichtmuster durch Licht (22) gebildet wird, das von ihnen in Reaktion auf die Beleuchtung mit Detektionslicht (20) abgestrahlt wird und am Ort des Detektors (24) ein von der Auswerteeinheit (26) zu detektierendes Interferenzmuster ergibt, das dem Lichtmuster entspricht, wobei
(i) die Nanostrukturen (14) derart angeordnet sind, dass sie bei Beleuchtung mit Detektionslicht (20) ein Interferenzmuster darstellen, das einem Barcode oder einem Matrixcode entspricht und/oder
(ii) eine Speichereinheit (28), in der wenigstens ein Referenzmuster abgelegt ist, und eine Vergleichseinheit (30) zum Vergleich des von dem wenigstens einen optischen Kennzeichnungsmerkmal (10) in Reaktion auf die Beleuchtung mit dem Detektionslicht (20) erzeugten Interferenzmusters mit dem wenigstens einen Referenzmuster vorgesehen sind.

2. System nach Anspruch 1, bei dem die Nanostrukturen (14) wenigstens in einer räumlichen Dimension eine Ausdehnung im Bereich des Wellenlängenbereiches oder einer Wellenlänge des Detektionslichtes haben.

3. System nach einem der vorhergehenden Ansprüche, bei dem die Nanostrukturen langgestreckte Nanoelemente (14) umfassen.

4. System nach einem der vorhergehenden Ansprüche, bei dem die Nanostrukturen (14) leitende Polymere umfassen.

5. Verfahren zur Identifikation oder Charakterisierung eines Gegenstandes (17) mit einem System nach einem der Ansprüche 1 bis 4, bei dem das wenigstens eine Kennzeichnungsmerkmal (10) mit Detektionslicht (20) beleuchtet wird und das in Reaktion darauf von dem Kennzeichnungsmerkmal (10) erzeugte Interferenzmuster detektiert wird.

6. Verfahren nach Anspruch 5, bei dem das erzeugte Interferenzmuster mit wenigstens einem Referenzmuster verglichen wird.

## Claims

1. A system of identifying or characterising objects (17) comprising
- at least one optical characterising feature (10) which comprises a plurality of nanostructures (14) on a surface (16) of an object (17) or on a substrate (12) located on a surface (16) of an object (17), with the nanostructures being adapted such that they generate a light pattern on illumination with detection light (20), said light pattern serving for the identification and/or characterisation of the object (17);
- a light source (18) for irradiating the detection light (20);
- a spatially resolving optical detector (24) for detecting the light pattern generated by the at least one optical characterising feature (10) in response to the illumination with the detection light (20); and
- an evaluation unit (26) connected to the detector for identifying or characterising the object (17) from the detected light pattern,
**characterised in that**
the nanostructures (14) are adapted and arranged such that the light pattern is formed by light (22) which is irradiated by them in response to the illumination with detection light (20) and results in an interference pattern at the location of the detector (24) which is to be detected by the evaluation unit (26) and which corresponds to the light pattern, wherein
(i) the nanostructures (14) are arranged such that, on illumination with detection light (20), they represent an interference pattern which corresponds to a barcode or to a matrix code; and/or
(ii) a memory unit (28) is provided in which at least one reference pattern is stored and a comparison unit (30) is provided for comparing the interference pattern generated by the at least one optical characterising feature (10) in response to the illumination with the detection light (20) with the at least one reference pattern.

2. A system in accordance with claim 1, wherein the nanostructures (14) have an extent at least in a spatial dimension in the region of the wavelength range or of a wavelength of the detection light.

3. A system in accordance with one of the preceding claims, wherein the nanostructures comprise elongated nanoelements (14).

4. A system in accordance with any one of the preceding claims, wherein the nanostructures (14) comprise conductive polymers.

5. A method of identifying or characterising an object (17) comprising a system in accordance with any one of the claims 1 to 4, wherein the at least one characterising feature (10) is illuminated by detection light (20) and the interference pattern generated by the characterising feature (10) in response thereto is detected.

6. A method in accordance with claim 5, wherein the generated interference pattern is compared with at least one reference pattern.

## Revendications

1. Système pour identifier ou caractériser des objets (19), comprenant
- au moins une caractéristique distinctive optique (10) qui comprend une pluralité de nanostructures (14) sur une surface (16) d'un objet (17) pour sur un substrat (12) qui se trouve sur une surface (16) d'un objet (17), dans lequel les nanostructures sont conçues de telle façon que lors de l'illumination avec une lumière de détection (20), elles engendrent un motif lumineux qui sert à l'identification et/ou à la caractérisation de l'objet (17),
- une source de lumière (18) pour émettre la lumière de détection (20),
- un détecteur optique (24) à résolution locale pour la détection du motif lumineux engendré par ladite au moins une caractéristique distinctive optique (10) en réaction à l'illumination avec la lumière de détection (20), et
- une unité d'évaluation (26) connectée avec le détecteur pour l'identification ou la caractérisation de l'objet (17) à partir du motif lumineux détecté,
**caractérisé en ce que**
les nanostructures (14) sont conçues et agencées de telle façon que le motif lumineux est formé par de la lumière (22) qui est émise par elles-mêmes en réaction à l'illumination avec la lumière de détection (20) et qui produit à l'emplacement du détecteur (24) un motif d'interférence à détecter par l'unité d'évaluation (26), qui correspond au motif lumineux, dans lequel
(i) les nanostructures (14) sont agencées de telle façon que lors de l'illumination avec la lumière de détection (20) elles représentent un motif d'interférence qui correspond à un code à barres ou à un code en matrice et/ou
(ii) il est prévu une unité à mémoire (28), dans laquelle est mémorisé au moins un motif de référence, et une unité de comparaison (30) pour comparer le motif d'interférence engendré par ladite au moins une caractéristique distinctive optique (10) en réaction à l'illumination par la lumière de détection (20) avec ledit au moins un motif de référence.

2. Système selon la revendication 1, dans lequel les nanostructures (14) ont, dans au moins une dimension dans l'espace, une extension de l'ordre de la plage des longueurs d'onde ou d'une longueur d'onde de la lumière de détection.

3. Système selon l'une des revendications précédentes, dans lequel les nanostructures comprennent des nanoéléments (14) étirés en longueur.

4. Système selon l'une des revendications précédentes, dans lequel les nanostructures (14) comprennent des polymères conducteurs.

5. Procédé pour identifier ou caractériser un objet (17) avec un système selon l'une des revendications 1 à 4, dans lequel ladite au moins une caractéristique distinctive (10) est illuminée avec une lumière de détection (20) et le motif d'interférence engendré par la caractéristique distinctive en réaction à cette lumière est détecté.

6. Procédé selon la revendication 5, dans lequel le motif d'interférence engendré est comparé avec au moins un motif de référence.
